# EUROPEAN PATENT SPECIFICATION

(11) **EP 4 498 693 B1**
(45) Date of publication and mention of the grant of the patent: **24.06.2026**
(21) Application number: 23853946.4
(22) Date of filing: 27.04.2023
(51) Int. Cl.: H04R 1/02, H04M 1/03

(54) **SOUND GENERATION DEVICE AND ELECTRONIC DEVICE**
SCHALLERZEUGUNGSVORRICHTUNG UND ELEKTRONISCHE VORRICHTUNG
DISPOSITIF DE GÉNÉRATION DE SON ET DISPOSITIF ÉLECTRONIQUE

(30) Priority: 16.08.2022 CN 202210979182
(43) Date of publication of application: 29.01.2025
(73) Proprietor: Honor Device Co., Ltd., Shenzhen, Guangdong 518040 (CN)
(72) Inventor: HU, Jingtao, Shenzhen, Guangdong 518040 (CN); CAO, Yubao, Shenzhen, Guangdong 518040 (CN); WANG, Xuyang, Shenzhen, Guangdong 518040 (CN); WANG, Yuan, Shenzhen, Guangdong 518040 (CN)
(74) Representative: Goddar, Heinz J.
(86) International application number: PCT/CN2023/091325
(87) International publication number: WO 2024/037039

(56) References cited:
- WO-A1-2021/129263
- CN-A- 108 650 345
- CN-U- 203 243 472
- CN-U- 210 247 039
- CN-U- 212 324 354
- CN-U- 215 344 658
- US-A1- 2019 069 056
- US-A1- 2020 260 166

## Description

This application claims priority to Chinese Patent Application No. 202210979182.6, filed with the China National Intellectual Property Administration on August 16, 2022 and entitled "SOUND-PRODUCING APPARATUS AND ELECTRONIC DEVICE".

### TECHNICAL FIELD

This application relates to the field of terminal technologies, and in particular, to a sound-producing apparatus and an electronic device.

### BACKGROUND

A speaker configured to play audio is arranged in an electronic device. The speaker includes a sound cavity and a sound outlet channel. A sound emitted from the speaker is transmitted through the sound cavity and the sound outlet channel that are interconnected, and then transmitted out from a sound outlet hole provided on a middle frame, to realize external sound playing by the electronic device. If a height of a front cavity in the sound cavity is relatively small, and an area of the sound outlet channel is small, a flow rate and an eddy current in a sound transmission process are increased, and then abnormal audio playing such as noise, an abnormally low sound, or uneven sound playing is caused, affecting a listening experience of a user.
CN 215 344 658 U discloses a sound emitting structure and electronic equipment, and belongs to the technical field of communication equipment. The sound outlet structure comprises a sound outlet hole formed in a middle frame, the first end of the sound outlet hole is located in the middle frame, and the second end of the sound outlet hole is located on the outer side wall of the middle frame; the sound outlet hole comprises a first section and a second section, the first section is close to the first end, the second section is close to the second end, and an obtuse angle is formed between the first section and the second section.
US 2020/260166 A1 discloses an audio component, including an enclosure, a speaker, and a connector. The enclosure includes a receptacle and a connection hole connected to the receptacle, both the speaker and the connector are accommodated in the receptacle, a plug port of the connector is connected to outside of the enclosure by using the connection hole, a sound guide channel connected between the speaker and the plug port is formed in the receptacle, and the sound guide channel is configured to propagate, to the plug port, a sound emitted by the speaker. Further, a mobile terminal is disclosed. CN 108 650 345 A discloses a mobile terminal, comprising a substrate, a loudspeaker sound chamber box and a screen component, wherein a through hole is formed in the substrate; the screen component is stacked at one side of the substrate; the loudspeaker sound chamber box is arranged one side, far away from the screen component, of the substrate; and the loudspeaker sound chamber box covers the through hole and enables the through hole to be located between the loudspeaker sound chamber box and the screen component, and the loudspeaker sound chamber box, the screen component and the substrate jointly form a sound chamber.
WO 2021/129263 A1 discloses a loudspeaker inner core comprising a first frame, a first vibrating diaphragm, and a first piezoelectric element. The first vibrating diaphragm comprises a middle portion and an edge portion surrounding the middle portion, wherein the edge portion is mounted on the first frame, the first piezoelectric element is fixed to the surface of the middle portion facing the first frame or the surface of the middle portion facing away from the first frame, and the edge portion is made of aluminum, aluminum magnesium alloy or magnesium aluminum alloy.
US 2019/069056 A1 discloses a slim sound component with a sealing member. The sound component includes: a sound component housing including: a first plate facing toward a first direction; a second plate facing toward a second direction opposite to the first direction; and a third plate facing toward a third direction perpendicular to the first and second directions; a sound generator disposed in the sound component housing to generate a sound in the first direction; a protection member mounted to be exposed through the first plate in the first direction to protect the sound generator; and a sealing member disposed between the sound component housing and the protection member, and the protection member and the sealing member are integrally formed with each other.
CN 210 247 039 U discloses a side-sounding loudspeaker support, a middle frame structure and a mobile terminal. The side sound outlet loudspeaker support comprises a support body, and an installation position and a sound outlet are formed on the support body. The installation position is formed on the inner side of the support body and used for installing the loudspeaker, a vibrating diaphragm of the loudspeaker is opposite to the inner side of the front face of the support body, and a sound outlet gap is reserved. The sound outlet is arranged on the side surface of the support body and is communicated with the sound outlet gap. The middle frame structure comprises a middle frame body and a side sound outlet loudspeaker support, and the side sound outlet loudspeaker support and the middle frame body are in curved surface sealing fit. The mobile terminal comprises a loudspeaker, a screen and a middle frame structure, a loud speaking gap is formed between the screen and the middle frame body, and the loud speaking gap and the sound outlet gap are communicated through the sound outlet to form an L-shaped loud speaking channel.
CN 203 243 472 U discloses a mobile terminal and a loudspeaker sound cavity for the same. The sound cavity is formed by encircling a main plate, a main plate adjacent component, a sealing element and a shell, wherein the sealing element is located on the main plate and the main plate adjacent component; the shell is buckled on the sealing element; the sealing element is located among the shell, the main plate and the main plate adjacent component; and a spacing sheet is arranged above a gap between the main plate and the main plate adjacent component in the sound cavity.
CN 212 324 354 U discloses a loudspeaker module and electronic equipment. The loudspeaker module comprises a shell and a first sound production unit, a first opening and a second opening are oppositely formed in the shell, the first sound production unit comprises a first vibration assembly and a second vibration assembly, a rear cavity is formed between the first sound production unit and the shell, the first vibration assembly is arranged at the position of the first opening, the second vibration assembly is arranged at the position of the second opening, and the second vibration assembly is arranged at the position of the second opening. A common magnetic circuit assembly is arranged between the first vibration assembly and the second vibration assembly, and the first opening and the second opening are both communicated with the rear cavity. The loudspeaker module comprises the multifunctional sound production first sound production unit, the first vibration assembly and the second vibration assembly in the first sound production unit share the rear cavity, and the audio signals passing through the first vibration assembly and the second vibration assembly have different sound effects so as to meet different scene requirements.

### SUMMARY

The invention provides a sound-producing apparatus of claim 1 and an electronic device of claim 10, to increase a height of a front cavity of a speaker and an area of a sound outlet channel, thereby improving audio playing quality of the speaker and a listening experience of a user. Further embodiments are disclosed in the dependent claims

According to a first aspect, an embodiment of this application provides a sound-producing apparatus of claim 1.

In this way, no obstruction exists between the speaker and the screen assembly, and the front cavity is directly formed, thereby increasing a height of the front cavity in the front cavity. The sound outlet ramp facing the mounting plane and spaced apart from the mounting plane and the screen assembly is arranged on the speaker. In other words, the sound outlet ramp is inclined in a direction away from the screen assembly, so that the sound outlet ramp, the middle frame, and the screen assembly form a wider sound outlet channel, thereby increasing an area of the sound outlet channel. By increasing the height of the front cavity and the area of the sound outlet channel, an eddy current and a flow rate during sound-producing and sound transmission of the speaker are improved, and abnormal audio playing problems such as noise, an abnormally low sound, or uneven sound playing are eliminated. This enhances the audio playing quality of the speaker, thereby providing the user with a better listening experience. In addition, in this embodiment of this application, a thickness of the sound-producing apparatus and a thickness of the electronic device using the sound-producing apparatus are not increased, and a weight of the sound-producing apparatus and a weight of the electronic device may be reduced.

In some implementations, the border frame includes a first end away from the screen assembly, and a second end connected to the screen assembly. A first engagement portion is arranged on the first end of the border frame. A second engagement portion is arranged on the second end of the border frame, and the screen assembly is connected to the second engagement portion. The sound outlet hole is located between the first engagement portion and the second engagement portion. In this way, through mating of the first engagement portion and the second engagement portion on the middle frame, reliable assembly of the speaker and a sealing assembly may be realized to avoid looseness or movement of the speaker, thereby ensuring communication between the sound outlet channel of the sound-producing apparatus and the sound outlet hole, and improving sealing performance of the sound outlet channel.

In some implementations, the sealing assembly is arranged between the speaker and the border frame. The sealing assembly successively includes a first sealing region, a sound outlet region, and a second sealing region along the first end to the second end of the border frame. The speaker is connected to the first engagement portion through the first sealing region. The screen assembly is connected to the second sealing region through the second engagement portion. The sound outlet region corresponds to a position of the sound outlet hole, to cause a sound transmitted from the sound outlet channel to be transmitted through the sound outlet region to the sound outlet hole. In this way, the foregoing three regions are divided for the sealing assembly. The first sealing region is connected to the first engagement portion, and the second sealing region is connected to the second engagement portion. The sound outlet region corresponds to the position of the sound outlet hole, so that the sound emitted from the speaker can be propagated through the front cavity and the sound outlet channel and then the sound outlet region of the sealing assembly, and then out of the electronic device from the sound outlet hole. In addition, a sealing width of the sound outlet channel is increased, thereby improving the sealing performance.

In some implementations, a transition portion is arranged on a side of the second engagement portion facing the sound outlet channel, and the transition portion is an arc-shaped structure. A transition angle matching the transition portion is arranged at a joint between the sound outlet region of the sealing assembly and the second sealing region, and the transition angle is greater than or equal to 90 degrees. A region of the sealing assembly provided with the transition angle mates with and is connected to the transition portion. In this way, through mating of the transition portion and the transition region, stability of the connection between the sealing assembly and the middle frame may be improved, and the sealing performance of the sound outlet channel may be improved. The transition angle is set to be greater than or equal to 90 degrees, so that a space between the sound outlet ramp and the sealing assembly is wider, thereby increasing the area of the sound outlet channel.

In some implementations, the sealing assembly includes a protective layer, a first adhesive layer, a reinforcing layer, and a second adhesive layer that are successively stacked. The first adhesive layer, the reinforcing layer, and the second adhesive layer are hollowed-out structures in the sound outlet region. In this way, through arrangement of the hollowed-out structures, the first adhesive layer, the reinforcing layer, and the second adhesive layer cover only a non-sound outlet region, and the sound outlet region covers only the protective layer, to achieve dustproof and waterproof sealing protection effects and reduce loss generated when the sound passes through the sound outlet region of the sealing assembly.

In some implementations, the sound outlet ramp includes a supporting surface arranged opposite to the first engagement portion. The supporting surface of the sound outlet ramp is connected to the first engagement portion through the first sealing region. In this way, the supporting surface is arranged on the sound outlet ramp, to facilitate sealing of the sound outlet channel, ensure tightness of sealed assembling, increase the space of the front cavity and the area of the sound outlet channel, and improve the audio playing quality of the sound-producing apparatus.

In some implementations, a first protruding portion and a second protruding portion are arranged on a side of the first engagement portion facing the mounting hole. The first protruding portion is inclined in a direction away from the screen assembly, and the second protruding portion is inclined in a direction close to the screen assembly. The supporting surface and the first sealing region are engaged between the first protruding portion and the second protruding portion. In this way, the supporting surface of the speaker and the sealing assembly are engaged between the first protruding portion and the second protruding portion, to prevent looseness or movement of the speaker and the sealing assembly, and ensure connection tightness and sealing performance among the speaker, the sealing assembly, and the middle frame.

In some implementations, the speaker includes a speaker body and a frame for supporting the speaker body. The boss is engaged with the second engagement portion. The frame is fixed to the boss, the speaker body is suspended inside the mounting hole, and the front cavity is formed by a gap between the speaker body and the screen assembly. At least one limiting block is arranged on an end of the second engagement portion close to the mounting hole, and the limiting block is configured to limit the second sealing region. In this way, through mating of the boss and the frame, the speaker body is fixed and suspended in the mounting hole. The mounting hole is a through-hole structure. No occlusion exists between the speaker body and the screen assembly, to implement an open front cavity and increase the height of the front cavity. Through arrangement of the limiting block, the limiting block mates with the first protruding portion and the second protruding portion, so that the sealing assembly is tightly fixed between the first engagement portion and the second engagement portion, to prevent shifting of the sealing assembly, thereby providing a reliable seal for the sound outlet channel.

In some implementations, the sound-producing apparatus further includes a first sealing member and a second sealing member. The first sealing member is arranged between the mounting plane and the screen assembly. The second sealing member is distributed at least between the supporting surface and the first sealing region, and between the boss and the frame. In this way, the first sealing member is configured for sealing between the speaker and the screen assembly, and the second sealing member is configured to hermetically connect an overall outer contour of the speaker to the middle frame, to improve sealing protection performance of the speaker.

According to a second aspect, an embodiment of this application further provides an electronic device, including the sound-producing apparatus according to the first aspect and the implementations thereof.

### BRIEF DESCRIPTION OF DRAWINGS

FIG. 1 is a schematic diagram of an electronic device;
FIG. 2 is a schematic structural diagram of a conventional sound-producing apparatus;
FIG. 3 is a schematic structural diagram of a speaker in a sound-producing apparatus according to an embodiment of this application;
FIG. 4 is a schematic structural diagram of a middle frame in a sound-producing apparatus according to an embodiment of this application;
FIG. 5 is a schematic sectional assembly diagram of a middle frame and a sealing assembly in a sound-producing apparatus according to an embodiment of this application;
FIG. 6 is an assembly effect diagram of a middle frame and a sealing assembly in a sound-producing apparatus according to an embodiment of this application;
FIG. 7 is a schematic structural diagram of a sealing assembly in a sound-producing apparatus according to an embodiment of this application;
FIG. 8 is a schematic sectional assembly diagram of a speaker, a sealing assembly, and a middle frame in a sound-producing apparatus according to an embodiment of this application;
FIG. 9 is a schematic sectional view of an overall assembly structure of a sound-producing apparatus according to an embodiment of this application;
FIG. 10 is a schematic diagram of a first sealing member arranged between a middle frame and a screen assembly in a sound-producing apparatus according to an embodiment of this application;
FIG. 11 is a schematic diagram of a second sealing member arranged between a speaker and a middle frame in a sound-producing apparatus according to an embodiment of this application; and
FIG. 12 is a flowchart of a method for mounting a sound-producing apparatus according to an embodiment of this application.

In the drawings, 1-Speaker, 101-Speaker body, 102-Bottom plate, 102a-Front cavity steel sheet, 102b-First component, 102c-Second component, 103-Front cavity, 103a-Sound outlet side, 104-Sound outlet channel, 105-Sound outlet ramp, 106-Supporting surface, 107-Frame; 2-Middle frame, 201-Border frame, 202-Mounting plane, 203-Mounting hole, 204-Sound outlet hole, 205-First end, 206-Second end, 207-First engagement portion, 207a-First protruding portion, 207b-Second protruding portion, 208-Second engagement portion, 209-Transition portion, 210-Boss, 211-Limiting block; 3-Screen assembly, 301-Display screen; 4-Sealing assembly, 401-First sealing region, 402-Sound outlet region, 403-Second sealing region, 404-Transition angle, 405-Protective layer, 406-First adhesive layer, 407-Reinforcing layer, 408-Second adhesive layer; 5-First sealing member; 6-Second sealing member.

### DESCRIPTION OF EMBODIMENTS

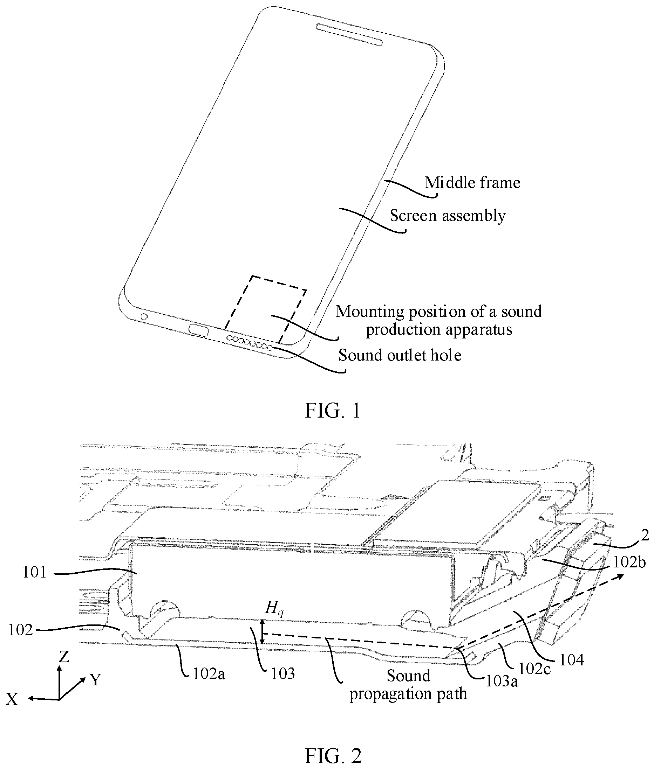

FIG. 1 is a schematic diagram of an electronic device. As shown in FIG. 1, the electronic device may include a screen assembly, a middle frame, and a rear housing. The middle frame may be configured to mount and fix components and devices inside the electronic device, for example, a speaker, a battery, a circuit board, and buttons (including an on/off button and a volume button). A sound outlet hole is arranged on the middle frame. A sound-producing apparatus is mounted to a position in communication with a sound outlet hole inside the electronic device, so that a sound emitted from the sound-producing apparatus is transmitted to outside of the electronic device through the sound outlet hole. A position of the sound outlet hole on the middle frame and a mounting position of the sound-producing apparatus in the electronic device are not limited to an example in FIG. 1.

FIG. 2 is a schematic structural diagram of a conventional sound-producing apparatus. As shown in FIG. 2, the sound-producing apparatus includes a speaker body 101 and a bottom plate 102 for supporting the speaker body 101. The speaker body 101 and the bottom plate 102 are distributed in a Z-axis direction. The bottom plate 102 includes a front cavity steel sheet 102a, a first component 102b, and a second component 102c. A specific spacing is defined between the front cavity steel sheet 102a and the speaker body 101 along the Z-axis direction, so that a gap between the front cavity steel sheet 102a and the speaker body 101 forms a front cavity 103. A side of the front cavity 103 is a sound outlet side 103a. On the sound outlet side 103a of the front cavity 103, the first component 102b is connected to a bottom of the speaker body 101, and the second component 102c is connected to the front cavity steel sheet 102a, so that a sound outlet channel 104 composed of the first component 102b and the second component 102c is formed on the sound outlet side 103a of the front cavity 103. The sound outlet channel 104 is in communication with the front cavity 103, to form a propagation path of a sound wave in the sound-producing apparatus.

Generally, a sound cavity of the sound-producing apparatus may include a front cavity 103 and a rear cavity (not shown in the figure), to improve audio playing quality of the sound-producing apparatus. The front cavity 103 is configured to cause sounds to produce a high-frequency cutoff frequency and a high-frequency peak, so as to increase an intermediate frequency, reduce high-frequency noise, reduce high-band extension, and improve sound conversion efficiency. The rear cavity is configured to prevent short circuits of medium and low frequency sounds, and improve intensity of the low-frequency sounds, to cause the sound to be mellower. A structure of the rear cavity is not limited in this application.

To enable a sound emitted from the speaker body 101 to be exported to outside of the electronic device, a sound outlet hole is provided on a middle frame of the electronic device. After the sound-producing apparatus is mounted to the middle frame, the sound outlet channel 104 can be brought into communication with the sound outlet hole. In this way, the sound emitted from the speaker body 101 is propagated through the front cavity 103 and the sound outlet channel 104, and finally out of the electronic device from the sound outlet hole, thereby realizing external sound playing by the electronic device.

As shown in FIG. 2, a sealing assembly 4 may be arranged on an end of the sound outlet channel 104 for communication with the sound outlet hole of the middle frame. The sealing assembly 4 may fill a slit between the sound outlet channel 104 and the middle frame, to seal the sound outlet channel 104 and prevent foreign matters such as water and dust from entering the speaker and the electronic device from the sound outlet hole. The sealing assembly 4 needs to have a sufficient sealing width along the Z-axis direction, to achieve a desirable sealing effect.

Since the entire electronic device has a limited thickness, and the front cavity steel sheet 102a has a specific thickness, a height *H_{q}* of the front cavity and an area of the sound outlet channel of the sound-producing apparatus are relatively small due to consideration of a mounting space of other components and devices inside the electronic device. This leads to an increase in a flow rate and an eddy current in a sound transmission process, and then causes abnormal audio playing such as noise, an abnormally low sound, or uneven sound playing, affecting a listening experience of a user.

To increase the height of the front cavity and the area of the sound outlet channel of the sound-producing apparatus and improve the audio playing quality, an embodiment of this application provides a sound-producing apparatus. The sound-producing apparatus may be applied to various electronic devices, to implement a function of audio playing of the electronic device. The electronic device includes, but is not limited to a device such as a mobile phone (including a foldable screen mobile phone), a tablet computer, a notebook computer, a large-screen device (for example, a smart TV and a smart screen), a personal computer (personalcomputer, PC), a handheld computer, a netbook, a personal digital assistant (personal digital assistant, PDA), a wearable electronic device, an on-board device, or a virtual reality device.

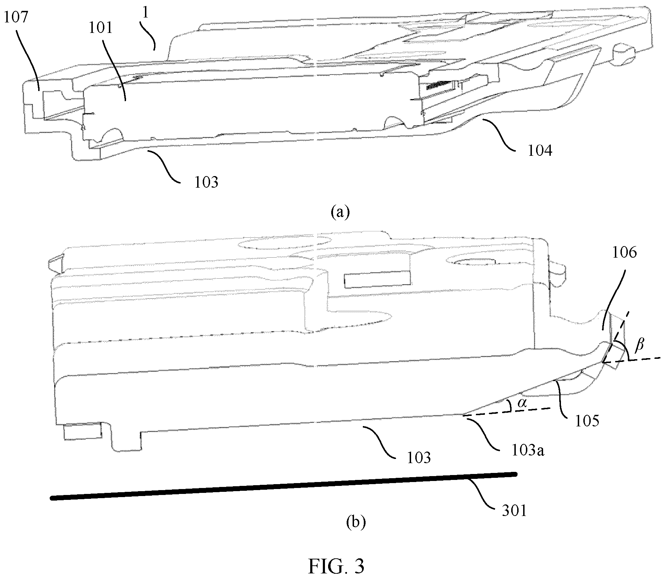

FIG. 3 is a schematic structural diagram of a speaker in a sound-producing apparatus according to an embodiment of this application. As shown in a view (a) of FIG. 2, the speaker 1 includes a speaker body 101. As shown in a view (b) of FIG. 3, in an electronic device, a height difference is defined between a display screen 301 and the speaker body 101 in a Z-axis direction, to form a front cavity 103 of the speaker 1. A sound outlet ramp 105 may be arranged on the speaker 1. The sound outlet ramp 105 is located between a sound outlet hole and the front cavity 103 in an X-axis direction, and the sound outlet ramp 105 is spaced apart from the display screen 301 in the Z-axis direction, to form a sound outlet channel 104 in communication with the front cavity 103 and the sound outlet hole.

In some implementations, as shown in FIG. 3, the speaker 1 further includes a frame 107 for supporting the speaker body 101. The sound outlet ramp 105 is arranged on an end of the frame 107 close to a sound outlet side 103a of the front cavity 103. The sound outlet ramp 105 is inclined in a direction away from the display screen 301, and forms a first angle α with a surface facing the display screen 301 that supports the speaker 1. A supporting surface 106 is arranged on an end of the sound outlet ramp 105 away from the front cavity 103. The supporting surface 106 is inclined in a direction away from the display screen 301, and forms a second angle β with a surface facing the display screen 301 that supports the speaker 1. The second angle β may be greater than the first angle α, to increase a space of the front cavity and an area of the sound outlet channel, and facilitate sealing of the sound outlet channel, thereby ensuring tightness of sealed assembling.

Compared with a structure of a conventional sound-producing apparatus, the front cavity steel sheet 102a is removed from the sound-producing apparatus provided in this embodiment of this application, changing the front cavity 103 from a closed form to an open form, and increasing a height of the front cavity. In addition, a second component 102c is further removed from the sound-producing apparatus provided in this embodiment of this application, that is, a physical entity below the sound outlet channel 104 is removed, to increase the area of the sound outlet channel below the sound outlet ramp 105. It may be seen that in the sound-producing apparatus provided in this embodiment of this application, the height of the front cavity and the area of the sound outlet channel are increased, an audio playing effect of the speaker is improved, and a weight of the sound-producing apparatus and a weight of the electronic device are reduced.

A sealed structure and a mounting manner of the sound-producing apparatus are described by using an example below with reference to more accompanying drawings.

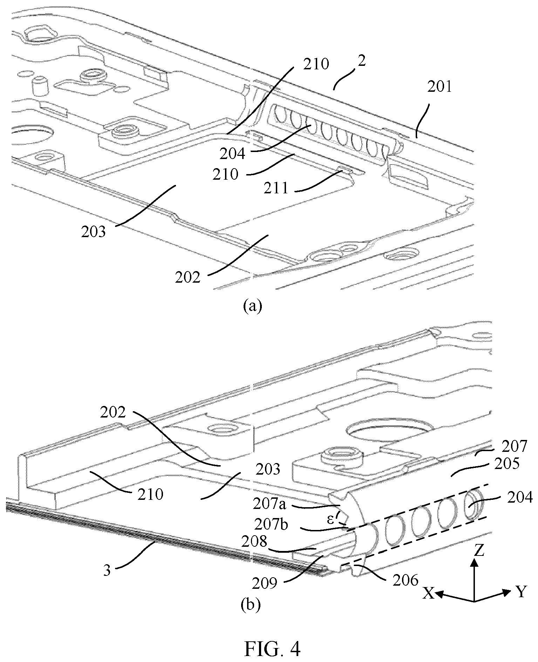

FIG. 4 is a schematic structural diagram of a middle frame in a sound-producing apparatus according to an embodiment of this application. As shown in a view (a) of FIG. 4, a middle frame 2 includes a border frame 201. At least one sound outlet hole 204 may be provided on the border frame 201. The sound outlet hole 204 is located in a projection region of a sound outlet channel in the middle frame 2. The sound outlet hole 204 is used to transmit a sound emitted from a speaker 1 to outside of an electronic device. When a plurality of sound outlet holes 204 are provided on the middle frame 2, an arrangement form of the plurality of sound outlet holes 204 is not limited in embodiments of this application. For example, as shown in FIG. 4, the plurality of sound outlet holes 204 may be distributed in a single-row array. For another example, the plurality of sound outlet holes 204 may be distributed in a multi-row array. The sound outlet hole 204 may be provided as a round hole, a square hole, or a through hole in another shape. This is not limited in embodiments of this application.

As shown in the view (a) and a view (b) of FIG. 4, the middle frame 2 further includes a mounting plane 202, and the border frame 201 is located at an edge of the mounting plane 202. A mounting hole 203 for mounting the speaker 1 is arranged on the mounting plane 202. The mounting hole 203 corresponds to a position of the sound outlet hole 204 in a Y-axis direction. The speaker 1 is arranged on a side of the mounting plane 202, and is located in a projection region of the mounting hole 203 in a Z-axis direction, so that the sound outlet channel 104 can cover and be brought into communication with the sound outlet hole 204 when the speaker 1 is placed in the mounting hole 203. A shape and a dimension of the mounting hole 203 match a shape and a dimension of the speaker 1, to ensure stability and sealing performance of assembly of the speaker 1.

As shown in FIG. 3 and the view (b) of FIG. 4, a screen assembly 3 is arranged on an other side of the mounting plane 202, and the screen assembly 3 is located in the projection region of the mounting hole 203. The speaker 1 and the screen assembly 3 are connected through the mounting hole 203 and are spaced apart from each other, to form a front cavity 103 of the speaker 1. After the speaker 1 is placed in the mounting hole 203, a sound outlet ramp 105 faces a direction of the mounting plane 202, and the sound outlet ramp 105 is spaced apart from the mounting plane 202 and the screen assembly 3 in the Z-axis direction, to form a sound outlet channel 104 in communication with the front cavity 103 and the sound outlet hole 204. A side of the middle frame 2 of the screen assembly 3 facing away from the front cavity 103 and the sound outlet channel 104 is connected to a rear housing (not shown in the figure) of the electronic device, thereby fixing components and devices such as the speaker inside the electronic device and realizing packaging of the entire electronic device. The mounting hole 203 extends through the mounting plane 202 along the Z-axis direction, so that when the speaker 1 is placed in the mounting hole 203, no obstacle and occlusion exist between the speaker body 101 and the screen assembly 3, thereby increasing a height of the front cavity.

The screen assembly 3 may include an inner screen and an outer screen. The inner screen is configured to display an image (that is, a display screen 301), and the outer screen is arranged outside the inner screen. In an implementation, the outer screen may include a cover plate and a touch panel (that is, a touch screen), so that the screen assembly 3 supports a touch function. In another implementation, the outer screen may include the cover plate instead of the touch panel. In this way, the outer screen may be configured to protect the inner screen and avoid damage to the inner screen.

In this embodiment of this application, when the screen assembly 3 includes the inner screen and the outer screen, the mounting plane 202 of the middle frame 2 is connected to the inner screen of the screen assembly 3.

As shown in FIG. 3 and the view (b) of FIG. 4, the border frame 201 includes a first end 205 away from the screen assembly 3 in the Z-axis direction, and a second end 206 connected to the screen assembly 3. A first engagement portion 207 is arranged on the first end 205 of the border frame 201. The first engagement portion 207 is configured to connect a sealing assembly 4 and a supporting surface 106 of the speaker 1. A first protruding portion 207a and a second protruding portion 207b distributed along the Y-axis direction are arranged on a side of the first engagement portion 207 facing the mounting hole 203. The first protruding portion 207a is inclined in a direction away from the screen assembly 3, and the second protruding portion 207b is inclined in a direction close to the screen assembly 3, so that an included angle ε is formed between the first protruding portion 207a and the second protruding portion 207b. In this way, the supporting surface 106 of the speaker 1 and the sealing assembly 4 are engaged between the first protruding portion 207a and the second protruding portion 207b, to prevent looseness or movement of the speaker 1 and the sealing assembly 4. An angle of the included angle ε is not limited. For example, the break angle ε is set to 90°.

As shown in FIG. 4, a second engagement portion 208 is arranged on the second end 206 of the border frame 201, and the screen assembly 3 is connected to the second engagement portion 208. The second engagement portion 208 is configured to connect to the sealing assembly 4. The sound outlet hole 204 is located between the first engagement portion 207 and the second engagement portion 208 in the Z-axis direction.

A boss 210 located on a periphery of the mounting hole 203 is further arranged on the mounting plane 202, and the boss 210 is engaged with the second engagement portion 208. When the speaker 1 is placed in the mounting hole 203, the speaker body 101 is located inside the mounting hole 203, and the boss 210 is configured to support the frame 107 of the speaker 1. The speaker 1 may be fixed to the mounting hole 203 of the middle frame 2 through mating of the first engagement portion 207, the second engagement portion 208, and the boss 210. The speaker body 101 is suspended inside the mounting hole 203, and a sealed front cavity 103 is formed through mating of the screen assembly 3 and the rear housing. In this way, the sound emitted from the speaker 1 may be transmitted outward through the front cavity 103 and the sound outlet channel 104, and finally transmitted from the sound outlet hole 204 to outside of the electronic device.

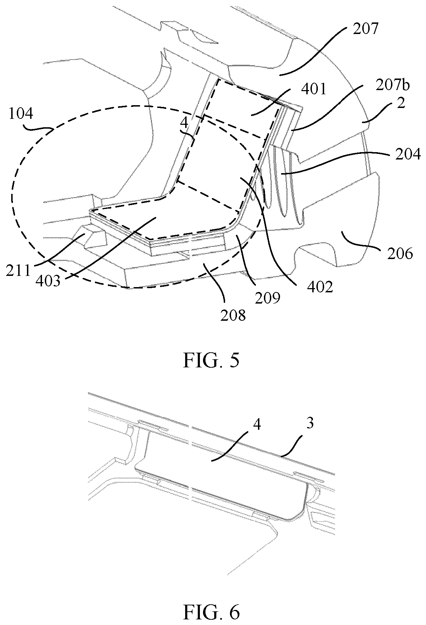

FIG. 5 is a schematic assembly diagram of a middle frame and a sealing assembly in a sound-producing apparatus according to an embodiment of this application. As shown in FIG. 5, a sealing assembly 4 may be arranged between a speaker 1 and a border frame 201. The sealing assembly 4 may be divided into three regions along a first end 205 to a second end 206 of the border frame 201, which are respectively a first sealing region 401, a sound outlet region 402, and a second sealing region 403. The first sealing region 401 corresponds to positions of a first engagement portion 207 in a Z-axis direction and a Y-axis direction, and is configured to seal a side of a sound outlet channel 104 close to a second protruding portion 207b. The second sealing region 403 corresponds to positions of a second engagement portion 208 in the Z-axis direction and the Y-axis direction, and is configured to seal a side of the sound outlet channel 104 close to the second end 206 of a middle frame 2. The sound outlet region 402 corresponds to a position of a hole array formed by a plurality of sound outlet holes 204 in the Z-axis direction and the Y-axis direction. That is, the sound outlet region 402 covers all of the sound outlet holes 204 in the Z-axis direction and the Y-axis direction, so that the sound transmitted by the sound outlet channel 104 can be transmitted through the sound outlet region to the sound outlet holes 204 and transmitted out from each of the sound outlet holes 204. The first sealing region 401 and the second sealing region 403 have sufficient sealing widths on two sides of the sound outlet channel 104 in the Z-axis direction, thereby ensuring sealing performance of the sound outlet channel, preventing sound leakage from the speaker and foreign matters such as water and dust from permeating the electronic device, and enhancing audio playing quality of the speaker.

As shown in FIG. 5, the first sealing region 401 is connected to the first engagement portion 207, and the second sealing region 403 of the sealing assembly 4 is connected to the second engagement portion 208. To ensure that the sound can penetrate the sealing assembly 4 and be transmitted out from the sound outlet hole 204, and prevent a sound wave from being blocked and lost, the sound outlet region 402 corresponding to the sound outlet hole 204 on the sealing assembly 4 may be sealed in a non-hermetic manner. For example, only a dustproof net is arranged. An assembly effect of the sealing assembly 4 and the middle frame 2 is shown in FIG. 6.

As shown in FIG. 4 and FIG. 5, to facilitate mounting of the sealing assembly 4 and ensure the sealing performance of the assembly, a transition portion 209 may be arranged on a side of the second engagement portion 208 facing the sound outlet channel 104. The transition portion 209 may be arranged as a smooth arc-shaped structure.

As shown in FIG. 4 and FIG. 5, at least one limiting block 211 may be further arranged on an end of the second engagement portion 208 close to the mounting hole 203. The limiting block 211 is configured to limit the second sealing region 403 of the sealing assembly 4. Refer to FIG. 5 and FIG. 6. The sealing assembly 4 is fixed between the first engagement portion 207 and the second engagement portion 208 through mating of the limiting block 211, the first protruding portion 207a, and the second protruding portion 207b, to prevent shifting of the sealing assembly 4, thereby providing a reliable seal for the sound outlet channel 104.

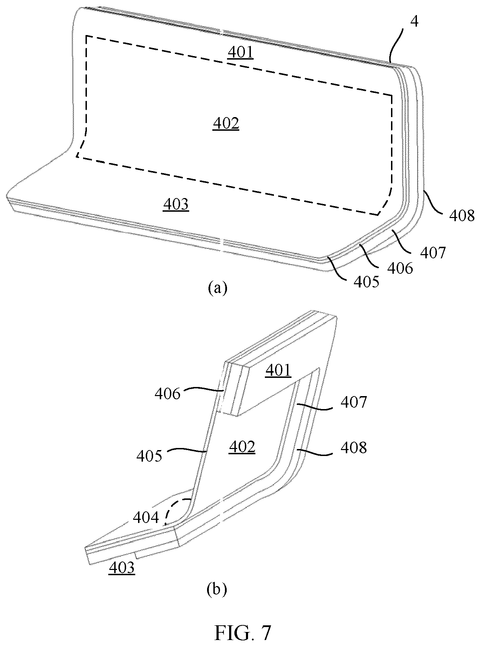

FIG. 7 is a schematic structural diagram of a sealing assembly in a sound-producing apparatus according to an embodiment of this application. A view (a) of FIG. 7 shows an overall structure of the sealing assembly, and a view (b) of FIG. 7 shows a sectional structure of the sealing assembly.

As shown in FIG. 7, a sealing assembly 4 may be arranged as a curved structure. A transition angle 404 that matches a transition portion 209 is provided at a joint between a second sealing region 403 and a sound outlet region 402. In this way, a transition region corresponding to the transition angle 404 exists on the sealing assembly 4. The transition region mates with and is connected to the transition portion 209, so as to improve stability of connection between the sealing assembly 4 and a middle frame 2, and improve sealing performance of a sound outlet channel.

As shown in FIG. 7, the sealing assembly 4 may include a protective layer 405, a first adhesive layer 406, a reinforcing layer 407, and a second adhesive layer 408 that are successively stacked. A thickness of each layer in the sealing assembly 4 is not limited, and may be set based on requirements for the sealing performance, connection strength, a weight, and the like.

The protective layer 405 may adopt a dustproof net to prevent dust. The dustproof net may be made of a material such as metal or a plastic. The first adhesive layer 406 is configured to bond the protective layer 405 and the reinforcing layer 407, and the second adhesive layer 408 is configured to bond the reinforcing layer 407 and a first engagement portion 207. The first adhesive layer 406 and the second adhesive layer 408 may be made of a material with good adhesion and attachment characteristics, such as a back adhesive and a double-sided tape. The reinforcing layer 407 can improve the overall strength and the sealing performance of the sealing assembly 4, and avoid problems such as deformation of the sealing assembly 4, loose sealing of the adhesive layer, and wrinkles on the dustproof net. The reinforcing layer 407 may be made of a metal material, for example, steel sheets and stainless steel.

As shown in the view (b) of FIG. 7, the protective layer 405 covers the sound outlet region 402 and a non-sound outlet region. The non-sound outlet region includes a first sealing region 401 and a second sealing region 403. The first adhesive layer 406, the reinforcing layer 407, and the second adhesive layer 408 are hollowed-out structures in the sound outlet region 402. In other words, the first adhesive layer 406, the reinforcing layer 407, and the second adhesive layer 408 cover only the non-sound outlet region. In this way, the sound outlet region 402 covers only the protective layer 405, to achieve dustproof and waterproof sealing protection effects and reduce loss generated when the sound passes through the sound outlet region of the sealing assembly 4.

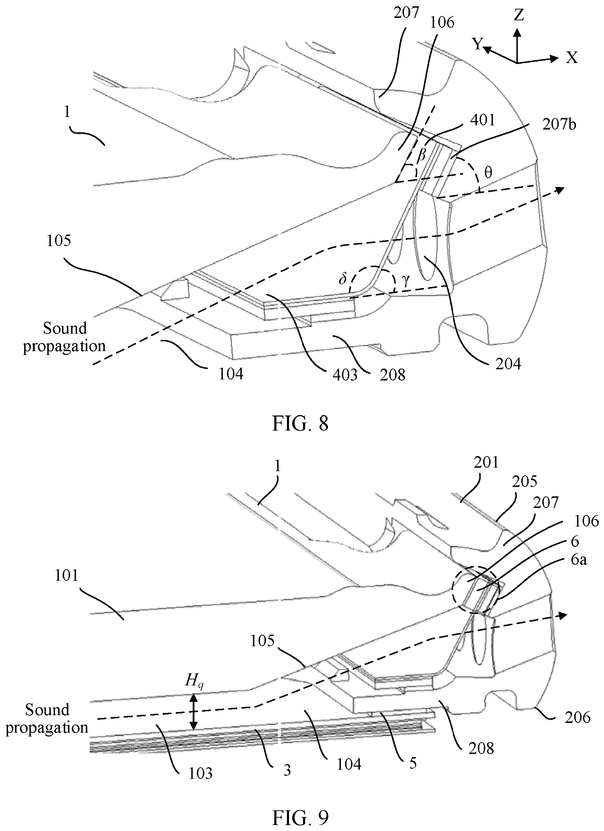

FIG. 8 is a schematic sectional assembly diagram of a speaker, a sealing assembly, and a middle frame in a sound-producing apparatus according to an embodiment of this application. As shown in FIG. 8, a speaker 1 is connected to a first engagement portion 207 through a first sealing region 401. The first engagement portion 207 of a middle frame 2 is engaged with a supporting surface 106 of the speaker 1, and the supporting surface 106 is connected to the first sealing region 401 of a sealing assembly 4. A front cavity 103, a sound outlet channel 104 below a sound outlet ramp 105, and a sound outlet hole 204 form a sound propagation path. A sound emitted from a speaker body 101 is transmitted through the front cavity 103 and the sound outlet channel 104 and through a protective layer 405 of the sealing assembly 4, and finally transmitted out from the sound outlet hole 204.

As shown in FIG. 8, the supporting surface 106 on the sound outlet ramp 105 is arranged opposite to the first engagement portion 207, and the supporting surface 106 and the first engagement portion 207 are connected through the first sealing region 401. To ensure that the supporting surface 106 is tightly attached to the first sealing region 401, an inclination angle β of the supporting surface 106 needs to be equal to an inclination angle γ of the first sealing region 401. The first sealing region 401 and a sound outlet region 402 have a same inclination angle. To ensure that the first sealing region 401 is tightly attached to a second protruding portion 207b, the inclination angle γ needs to be equal to an inclination angle θ of an end surface of the second protruding portion 207b. Therefore, the inclination angle β, the inclination angle γ, and the inclination angle θ are related and consistent. If an inclination angle after a second sealing region 403 and a second engagement portion 208 are fixedly connected is 0°, and an angle of a transition angle 404 is represented by δ, a magnitude of the transition angle δ directly affects the inclination angle γ. Therefore, the inclination angle β and the inclination angle θ may be associatively set based on the transition angle δ of the sealing assembly 4, to ensure tightness of connection and sealing performance among the speaker 1, the sealing assembly 4, and the middle frame 2. For example, β=θ=γ=180°-δ is set.

As shown in FIG. 8, the transition angle δ may be set to be greater than or equal to 90°, so that a space between the sound outlet ramp 105 and the sealing assembly 4 is wider, thereby increasing an area of the sound outlet channel.

FIG. 9 is a schematic sectional view of an overall assembly structure of a sound-producing apparatus according to an embodiment of this application. As shown in FIG. 9, at a first end 205 of a border frame 201, a supporting surface 106 of a speaker 1 is connected to a first engagement portion 207 through a first sealing region 401. At a second end 206 of the border frame 201, a screen assembly 3 is connected to a second sealing region 403 through a second engagement portion 208. After the speaker 1, a sealing assembly 4, a middle frame 2, and the screen assembly 3 are connected, a hermetic front cavity 103 is formed. A mounting hole 203 extending through a mounting plane 202 in a Z-axis direction is provided, and the speaker 1 is arranged as an open front cavity. After the speaker 1 is fixed to the mounting hole 203, a height *H_{q}* of the front cavity is a height difference between a speaker body 101 and the screen assembly 3. In a case that a thickness of an electronic device body and a thickness of the speaker body 101 are not affected, a height increase of the open front cavity is equal to a thickness of a front cavity steel sheet 102a, which increases the height of the front cavity. A sound outlet ramp 105, the sealing assembly 4, the middle frame 2, and the screen assembly 3 form a sealed sound outlet channel 104. Through such structural designs as arranging the sealing assembly 4 having the transition angle δ, properly increasing the first angle α of the sound outlet ramp 105, and removing the second component 102c, an area of the sound outlet channel can be increased, a flow rate and an eddy current can be reduced, and audio playing quality of the speaker can be improved. Moreover, it can be further ensured that the sound outlet channel 104 has a sufficient sealing width in a Z-axis direction, thereby improving sealing performance and avoiding sound leakage from the speaker and failure of components and devices as a result of immersion of foreign matters into the electronic device.

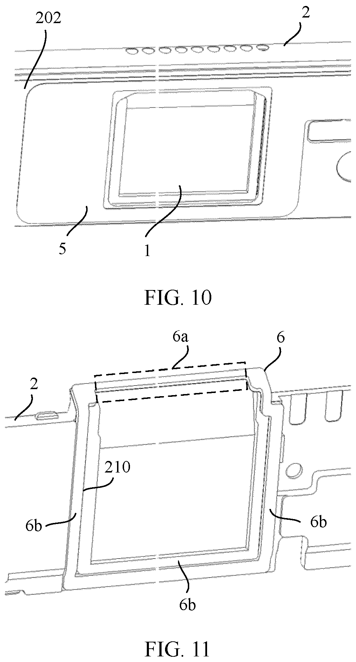

FIG. 10 is a schematic diagram of a first sealing member arranged between a middle frame and a screen assembly in a sound-producing apparatus according to an embodiment of this application. As shown in FIG. 9 and FIG. 10, a first sealing member 5 is arranged between the mounting plane 202 and the screen assembly 3. The first sealing member 5 does not cover at least a front cavity 103 of a speaker 1 and a sound outlet channel 104, to ensure that a height of the front cavity and an area of the sound outlet channel are not reduced. A coverage range of the first sealing member 5 may be designed based on types, mounting positions, performance requirements, sealing requirements, and the like of components and devices on a middle frame 2. The first sealing member 5 may be made of a foam material. Foam has elasticity. By compressing the foam, a specific amount of compression is applied to the foam to fully activate sealing performance of the foam. The amount of compression of the foam may be set to be greater than or equal to 50%. In addition, the foam further has characteristics such as anti-vibration, a thin volume, and a light weight, which not only can improve sealing performance of the speaker, and but also facilitates a reduction in a weight of an electronic device.

FIG. 11 is a schematic diagram of a second sealing member arranged between a speaker and a middle frame in a sound-producing apparatus according to an embodiment of this application. As shown in FIG. 9 and FIG. 11, a second sealing member 6 may be arranged between the speaker 1 and the middle frame 2. The second sealing member 6 is distributed at least in a contact region 6a between the supporting surface 106 and the first sealing region 401, and a supporting region 6b of the boss 210 for the frame 107 of the speaker 1. By arranging the second sealing member 6, hermetic connection between the overall outer contour of the speaker 1 and the middle frame 2 is implemented, and the sealing protection performance of the speaker 1 is improved. The second sealing member 6 may also be made of a foam material. An amount of compression of the foam may be set to be greater than or equal to 50%.

The speaker 1 and other components and devices and modules included within the electronic device may be all mounted to the middle frame 2 between the screen assembly 3 and a rear housing. In this regard, in addition to a region of mounting hole 203 for mounting the speaker 1, components and devices such as a main board, a memory, a battery, a camera, and a sound collector may be further mounted to the mounting plane 202 of the middle frame 2. In this application, structures, assembly, and sealing of other components and devices and modules other than the speaker are not limited, and a software function configuration of the electronic device is not limited. If the electronic device is equipped with a plurality of speakers, the height of the front cavity and the area of the sound outlet channel corresponding to each speaker may be increased by referring to the structure and the sealing assembly manner of the foregoing sound-producing apparatus.

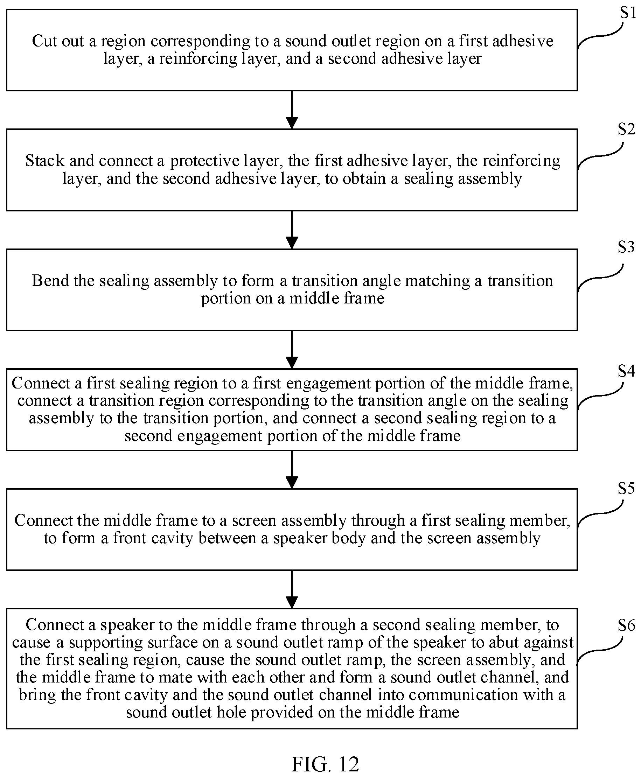

Based on the structure of the sound-producing apparatus provided in FIG. 3 to FIG. 11, an embodiment of this application further provides a method for mounting a sound-producing apparatus. As shown in FIG. 12, the method includes the following steps.

Step S1: Cut out a region corresponding to a sound outlet region on a first adhesive layer, a reinforcing layer, and a second adhesive layer.

Step S2: Stack and connect the protective layer, the first adhesive layer, the reinforcing layer, and the second adhesive layer, to obtain a sealing assembly.

The sealing assembly further has a non-sound outlet region. The non-sound outlet region includes a first sealing region and a second sealing region. The first sealing region is located on a side of the sound outlet region away from a screen assembly in a Z-axis direction, and the second sealing region is located on a side close to the screen assembly in the Z-axis direction.

Step S3: Bend the sealing assembly to form a transition angle matching a transition portion on a middle frame.

Step S4: Connect the first sealing region to a first engagement portion of the middle frame, connect a transition region corresponding to the transition angle on the sealing assembly to a transition portion, and connect the second sealing region to a second engagement portion of the middle frame.

Step S5: Connect the middle frame to the screen assembly through a first sealing member, to form a front cavity between a speaker body and the screen assembly.

Step S6: Connect a speaker to the middle frame through a second sealing member, to cause a supporting surface on a sound outlet ramp of the speaker to abut against the first sealing region, cause the sound outlet ramp, the screen assembly, and the middle frame to mate with each other and form a sound outlet channel, and bring the front cavity and the sound outlet channel into communication with a sound outlet hole provided on the middle frame.

An order and a manner of sealing and mounting the sound-producing apparatus are not limited to the foregoing method embodiments.

In embodiments of this application, the sound-producing apparatus adopts the open front cavity, and a structural component that reduces the height of the front cavity does not exist between the speaker body and the screen assembly, which increases the height of the front cavity. By arranging the sound outlet ramp on the speaker and a specially designed sealing assembly and through mating of the mounting hole 203 and the boss 210, the area of the sound outlet channel is increased. Therefore, an eddy current and a flow rate during sound generation and sound propagation of the speaker are increased, abnormal audio playing problems such as noise, an abnormally low sound, or uneven sound playing are eliminated, and audio playing quality of the speaker is improved. In addition, a stable and reliable sealing structure is provided for the speaker, to prevent foreign matters such as dust and liquids from permeating the speaker and the electronic device. In this way, effective protection is provided for the speaker and other components and devices, the thickness of the electronic device is not increased, the weight of the sound-producing apparatus and the weight of the electronic device are reduced.

An embodiment of this application further provides an electronic device. The electronic device includes at least one sound-producing apparatus in the foregoing embodiments and the implementations thereof.

In the foregoing specific implementations, objectives, technical solutions, and benefits of embodiments of this application are further described in detail. It should be understood that the foregoing descriptions are merely specific implementations of embodiments of this application, and are not intended to limit the protection scope which is defined by the claims.

## Claims

1. A sound-producing apparatus, comprising a speaker (1), a middle frame (2), and a screen assembly (3), wherein
the middle frame (2) comprises a border frame (201) and a mounting plane (202);
the border frame (201) is located at an edge of the mounting plane (202), and a mounting hole (203) is provided on the mounting plane (202), and a boss (210) is arranged on a periphery of the mounting hole (203);
the speaker (1) is arranged on the boss (210), and is located in a projection region of the mounting hole (203);
the screen assembly (3) is arranged on the side of the mounting plane (202) which is away from the boss (210), and is located in the projection region of the mounting hole (203);
the speaker (1) and the screen assembly (3) are brought into communication by sound through the mounting hole (203), and are spaced apart from each other, to form a front cavity (103) of the speaker (1);
a sound outlet hole (204) is provided on the border frame (201), and a sound outlet ramp (105) is further arranged on the speaker (1); and
the sound outlet ramp (105) is located between the sound outlet hole (204) and the front cavity (103) and faces the mounting plane (202), and the sound outlet ramp (105) is inclined in a direction away from the screen assembly (3); and the sound outlet ramp (105) is spaced apart from the mounting plane (202) and the screen assembly (3), to form a sound outlet channel (104) in communication with the front cavity (103) and the sound outlet hole (204).

2. The sound-producing apparatus according to claim 1, wherein
the border frame (201) comprises a first end (205) away from the screen assembly, and a second end (206) connected to the screen assembly (3);
a first engagement portion (207) is arranged on the first end (205) of the border frame (201);
a second engagement portion (208) is arranged on the second end (206) of the border frame (201), and the screen assembly (3) is connected to the second engagement portion (208); and
the sound outlet hole (204) is located between the first engagement portion (207) and the second engagement portion (208).

3. The sound-producing apparatus according to claim 2, further comprising a sealing assembly (4), wherein
the sealing assembly (4) is arranged between the speaker (1) and the border frame (201);
the sealing assembly (4) successively comprises a first sealing region (401), a sound outlet region (402), and a second sealing region (403) along the first end (205) to the second end (206) of the border frame (201);
the speaker (1) is connected to the first engagement portion (207) through the first sealing region (401);
the screen assembly (3) is connected to the second sealing region (403) through the second engagement portion (208); and
the sound outlet region (402) corresponds to a position of the sound outlet hole (204), to cause a sound transmitted from the sound outlet channel (104) to be transmitted through the sound outlet region (402) to the sound outlet hole (204).

4. The sound-producing apparatus according to claim 3, wherein
a transition portion (209) is arranged on a side of the second engagement portion (208) facing the sound outlet channel (104), and the transition portion (209) is an arc-shaped structure;
a transition angle (404) matching the transition portion (209) is arranged at a joint between the sound outlet region (402) and the second sealing region (403), and the transition angle (404) is greater than or equal to 90 degrees; and
a region of the sealing assembly (4) provided with the transition angle (404) mates with and is connected to the transition portion (209).

5. The sound-producing apparatus according to claim 3, wherein
the sealing assembly (4) comprises a protective layer (405), a first adhesive layer (406), a reinforcing layer (407), and a second adhesive layer (408) that are successively stacked; and
the first adhesive layer (406), the reinforcing layer (407), and the second adhesive layer (408) are hollowed-out structures in the sound outlet region (402).

6. The sound-producing apparatus according to claim 4, wherein
the sound outlet ramp (105) comprises a supporting surface (106) arranged opposite to the first engagement portion (207); and
the supporting surface (106) is connected to the first engagement portion (207) through the first sealing region (401).

7. The sound-producing apparatus according to claim 6, wherein
a first protruding portion (207a) and a second protruding portion (207b) are arranged on a side of the first engagement portion (207) facing the mounting hole (203);
the first protruding portion (207a) is inclined in a direction away from the screen assembly (3), and the second protruding portion (207b) is inclined in a direction close to the screen assembly (3); and
the supporting surface (106) and the first sealing region (401) are engaged between the first protruding portion (207a) and the second protruding portion (207b).

8. The sound-producing apparatus according to claim 6, wherein
the speaker (1) comprises a speaker body (101) and a frame (107) for supporting the speaker body;
and the boss (210) is engaged with the second engagement portion (208);
the frame (107) is fixed to the boss (210), the speaker body (101) is suspended inside the mounting hole (203), and the front cavity (103) is formed by a gap between the speaker body (101) and the screen assembly (3); and
at least one limiting block (211) is arranged on an end of the second engagement portion (208) close to the mounting hole (203), and the limiting block (211) is configured to limit the second sealing region (403).

9. The sound-producing apparatus according to claim 8, further comprising a first sealing member (5) and a second sealing member (6), wherein
the first sealing member (5) is arranged between the mounting plane (202) and the screen assembly (3); and
the second sealing member (6) is distributed at least between the supporting surface (106) and the first sealing region (401) and between the boss (210) and the frame (107).

10. An electronic device, comprising the sound-producing apparatus according to any one of claims 1 to 9.

## Patentansprüche

1. Schallerzeugende Vorrichtung, umfassend einen Lautsprecher (1), einen Mittelrahmen (2) und eine Bildschirmanordnung (3), wobei
der Mittelrahmen (2) einen Randrahmen (201) und eine Montageebene (202) umfasst;
der Randrahmen (201) an einem Rand der Montageebene (202) angeordnet ist, ein Montageloch (203) in der Montageebene (202) vorgesehen ist und ein Vorsprung (210) an einem Umfang des Montagelochs (203) angeordnet ist;
der Lautsprecher (1) auf dem Vorsprung (210) angeordnet ist und sich in einem Projektionsbereich des Montagelochs (203) befindet;
die Bildschirmanordnung (3) auf der Seite der Montageebene (202) angeordnet ist, die von dem Vorsprung (210) abgewandt ist, und sich in dem Projektionsbereich des Montagelochs (203) befindet;
der Lautsprecher (1) und die Bildschirmanordnung (3) durch das Montageloch (203) schalltechnisch miteinander verbunden und voneinander beabstandet sind, um einen vorderen Hohlraum (103) des Lautsprechers (1) zu bilden;
ein Schallauslassloch (204) am Randrahmen (201) vorgesehen ist und eine Schallauslassrampe (105) ferner am Lautsprecher (1) angeordnet ist; und
die Schallauslassrampe (105) zwischen dem Schallauslassloch (204) und dem vorderen Hohlraum (103) angeordnet ist und der Montageebene (202) zugewandt ist, wobei die Schallauslassrampe (105) in eine von der Bildschirmanordnung (3) wegweisende Richtung geneigt ist; und die Schallauslassrampe (105) von der Montageebene (202) und der Bildschirmanordnung (3) beabstandet ist, um einen Schallauslasskanal (104) zu bilden, der mit dem vorderen Hohlraum (103) und dem Schallauslassloch (204) in Verbindung steht.

2. Schallerzeugende Vorrichtung nach Anspruch 1, wobei
der Randrahmen (201) ein erstes Ende (205) abgewandt von der Bildschirmanordnung und ein zweites Ende (206) verbunden mit der Bildschirmanordnung (3) umfasst;
ein erster Eingriffsabschnitt (207) an dem ersten Ende (205) des Randrahmens (201) angeordnet ist;
ein zweiter Eingriffsabschnitt (208) an dem zweiten Ende (206) des Randrahmens (201) angeordnet ist und die Bildschirmanordnung (3) mit dem zweiten Eingriffsabschnitt (208) verbunden ist; und
das Schallauslassloch (204) zwischen dem ersten Eingriffsabschnitt (207) und dem zweiten Eingriffsabschnitt (208) angeordnet ist.

3. Schallerzeugende Vorrichtung nach Anspruch 2, ferner umfassend eine Dichtungsanordnung (4), wobei
die Dichtungsanordnung (4) zwischen dem Lautsprecher (1) und dem Randrahmen (201) angeordnet ist;
die Dichtungsanordnung (4) nacheinander einen ersten Dichtungsbereich (401), einen Schallauslassbereich (402) und einen zweiten Dichtungsbereich (403) entlang des ersten Endes (205) bis zum zweiten Ende (206) des Randrahmens (201) umfasst;
der Lautsprecher (1) ist über den ersten Dichtungsbereich (401) mit dem ersten Eingriffsabschnitt (207) verbunden;
die Siebanordnung (3) ist über den zweiten Eingriffsabschnitt (208) mit dem zweiten Dichtungsbereich (403) verbunden; und
der Tonauslassbereich (402) entspricht einer Position des Tonauslasslochs (204), um zu bewirken, dass ein aus dem Tonauslasskanal (104) übertragener Schall durch den Tonauslassbereich (402) zum Tonauslassloch (204) übertragen wird.

4. Tonerzeugungsvorrichtung nach Anspruch 3, wobei
ein Übergangsabschnitt (209) an einer dem Tonauslasskanal (104) zugewandten Seite des zweiten Eingriffsabschnitts (208) angeordnet ist und der Übergangsabschnitt (209) eine bogenförmige Struktur aufweist;
ein an den Übergangsabschnitt (209) angepasster Übergangswinkel (404) an einer Verbindungsstelle zwischen dem Tonauslassbereich (402) und dem zweiten Dichtungsbereich (403) angeordnet ist, und der Übergangswinkel (404) größer oder gleich 90 Grad ist; und
ein Bereich der Dichtungsanordnung (4), der mit dem Übergangswinkel (404) versehen ist, mit dem Übergangsabschnitt (209) zusammenwirkt und mit diesem verbunden ist.

5. Tonerzeugungsvorrichtung nach Anspruch 3, wobei
die Dichtungsanordnung (4) eine Schutzschicht (405), eine erste Klebeschicht (406), eine Verstärkungsschicht (407) und eine zweite Klebeschicht (408) umfasst, die nacheinander gestapelt sind; und
die erste Klebeschicht (406), die Verstärkungsschicht (407) und die zweite Klebeschicht (408) im Tonauslassbereich (402) als ausgesparte Strukturen ausgebildet sind.

6. Tonerzeugungsvorrichtung nach Anspruch 4, wobei
die Tonauslassschräge (105) eine Stützfläche (106) umfasst, die gegenüber dem ersten Eingriffsabschnitt (207) angeordnet ist; und
die Stützfläche (106) über den ersten Dichtungsbereich (401) mit dem ersten Eingriffsabschnitt (207) verbunden ist.

7. Tonerzeugungsvorrichtung nach Anspruch 6, wobei
ein erster hervorstehender Abschnitt (207a) und ein zweiter hervorstehender Abschnitt (207b) an einer dem Montageloch (203) zugewandten Seite des ersten Eingriffsabschnitts (207) angeordnet sind;
der erste hervorstehende Abschnitt (207a) in einer Richtung weg von der Siebanordnung (3) geneigt ist, und der zweite hervorstehende Abschnitt (207b) in einer Richtung zur Siebanordnung (3) hin geneigt ist; und
die Stützfläche (106) und der erste Dichtungsbereich (401) zwischen dem ersten hervorstehenden Abschnitt (207a) und dem zweiten hervorstehenden Abschnitt (207b) in Eingriff stehen.

8. Tonerzeugungsvorrichtung nach Anspruch 6, wobei
der Lautsprecher (1) umfasst einen Lautsprecherkörper (101) und einen Rahmen (107) zum Stützen des Lautsprecherkörpers;
und der Vorsprung (210) steht mit dem zweiten Eingriffsabschnitt (208) in Eingriff;
der Rahmen (107) ist an dem Vorsprung (210) befestigt, der Lautsprecherkörper (101) ist innerhalb der Montageöffnung (203) aufgehängt, und der vordere Hohlraum (103) wird durch einen Spalt zwischen dem Lautsprecherkörper (101) und der Siebanordnung (3) gebildet; und
mindestens ein Begrenzungsblock (211) ist an einem Ende des zweiten Eingriffsabschnitts (208) in der Nähe der Montageöffnung (203) angeordnet, und der Begrenzungsblock (211) ist dazu konfiguriert, den zweiten Dichtungsbereich (403) zu begrenzen.

9. Schallerzeugungsvorrichtung nach Anspruch 8, ferner umfassend ein erstes Dichtungselement (5) und ein zweites Dichtungselement (6), wobei
das erste Dichtungselement (5) zwischen der Montageebene (202) und der Siebanordnung (3) angeordnet ist; und
das zweite Dichtungselement (6) zumindest zwischen der Stützfläche (106) und dem ersten Dichtungsbereich (401) sowie zwischen dem Vorsprung (210) und dem Rahmen (107) verteilt ist.

10. Elektronische Vorrichtung, umfassend die Schallerzeugungsvorrichtung nach einem der Ansprüche 1 bis 9.

## Revendications

1. Appareil de production sonore, comprenant un haut-parleur (1), un cadre intermédiaire (2) et un ensemble écran (3), dans lequel
le cadre intermédiaire (2) comprend un cadre de bordure (201) et un plan de montage (202) ;
le cadre de bordure (201) est situé au niveau d'un bord du plan de montage (202), un trou de montage (203) est prévu sur le plan de montage (202), et un bossage (210) est disposé sur une périphérie du trou de montage (203) ;
le haut-parleur (1) est disposé sur le bossage (210) et est situé dans une région de projection du trou de montage (203) ;
l'ensemble écran (3) est disposé sur le côté du plan de montage (202) qui est éloigné du bossage (210), et est situé dans la région de projection du trou de montage (203) ;
le haut-parleur (1) et l'ensemble écran (3) sont mis en communication sonore par le trou de montage (203), et sont espacés l'un de l'autre, pour former une cavité avant (103) du haut-parleur (1) ;
un trou de sortie sonore (204) est prévu sur le cadre de bordure (201), et une rampe de sortie sonore (105) est en outre disposée sur le haut-parleur (1) ; et
la rampe de sortie sonore (105) est située entre le trou de sortie sonore (204) et la cavité avant (103) et fait face au plan de montage (202), et la rampe de sortie sonore (105) est inclinée dans une direction s'éloignant de l'ensemble écran (3) ; et la rampe de sortie sonore (105) est espacée du plan de montage (202) et de l'ensemble écran (3), pour former un canal de sortie sonore (104) en communication avec la cavité avant (103) et le trou de sortie sonore (204).

2. Appareil de production sonore selon la revendication 1, dans lequel
le cadre de bordure (201) comprend une première extrémité (205) éloignée de l'ensemble écran, et une seconde extrémité (206) connectée à l'ensemble écran (3) ;
une première partie d'engagement (207) est disposée sur la première extrémité (205) du cadre de bordure (201) ;
une seconde partie d'engagement (208) est disposée sur la seconde extrémité (206) du cadre de bordure (201), et l'ensemble écran (3) est connecté à la seconde partie d'engagement (208) ; et
le trou de sortie sonore (204) est situé entre la première partie d'engagement (207) et la seconde partie d'engagement (208).

3. Appareil de production sonore selon la revendication 2, comprenant en outre un ensemble d'étanchéité (4), dans lequel
l'ensemble d'étanchéité (4) est disposé entre le haut-parleur (1) et le cadre de bordure (201) ;
l'ensemble d'étanchéité (4) comprend successivement une première région d'étanchéité (401), une région de sortie sonore (402) et une seconde région d'étanchéité (403) le long de la première extrémité (205) vers la seconde extrémité (206) du cadre de bordure (201) ;
le haut-parleur (1) est connecté à la première partie d'engagement (207) par l'intermédiaire de la première région d'étanchéité (401) ;
l'ensemble écran (3) est connecté à la deuxième région d'étanchéité (403) par l'intermédiaire de la deuxième partie d'engagement (208) ; et
la région de sortie de son (402) correspond à une position du trou de sortie de son (204), pour amener un son transmis depuis le canal de sortie de son (104) à être transmis à travers la région de sortie de son (402) vers le trou de sortie de son (204).

4. Appareil de production sonore selon la revendication 3, dans lequel
une partie de transition (209) est disposée sur un côté de la deuxième partie d'engagement (208) faisant face au canal de sortie de son (104), et la partie de transition (209) est une structure en forme d'arc ;
un angle de transition (404) correspondant à la partie de transition (209) est disposé à une jonction entre la région de sortie de son (402) et la deuxième région d'étanchéité (403), et l'angle de transition (404) est supérieur ou égal à 90 degrés ; et
une région de l'ensemble d'étanchéité (4) pourvue de l'angle de transition (404) s'accouple avec et est connectée à la partie de transition (209).

5. Appareil de production sonore selon la revendication 3, dans lequel
l'ensemble d'étanchéité (4) comprend une couche protectrice (405), une première couche adhésive (406), une couche de renforcement (407) et une deuxième couche adhésive (408) qui sont successivement empilées ; et
la première couche adhésive (406), la couche de renforcement (407) et la deuxième couche adhésive (408) sont des structures évidées dans la région de sortie de son (402).

6. Appareil de production sonore selon la revendication 4, dans lequel
la rampe de sortie de son (105) comprend une surface de support (106) disposée à l'opposé de la première partie d'engagement (207) ; et
la surface de support (106) est connectée à la première partie d'engagement (207) par l'intermédiaire de la première région d'étanchéité (401).

7. Appareil de production sonore selon la revendication 6, dans lequel
une première partie saillante (207a) et une deuxième partie saillante (207b) sont disposées sur un côté de la première partie d'engagement (207) faisant face au trou de montage (203) ;
la première partie saillante (207a) est inclinée dans une direction s'éloignant de l'ensemble écran (3), et la deuxième partie saillante (207b) est inclinée dans une direction se rapprochant de l'ensemble écran (3) ; et
la surface de support (106) et la première région d'étanchéité (401) sont engagées entre la première partie saillante (207a) et la deuxième partie saillante (207b).

8. Appareil de production sonore selon la revendication 6, dans lequel
le haut-parleur (1) comprend un corps de haut-parleur (101) et un cadre (107) pour supporter le corps de haut-parleur ;
et la bosse (210) est en prise avec la seconde partie de mise en prise (208) ;
le cadre (107) est fixé à la bosse (210), le corps de haut-parleur (101) est suspendu à l'intérieur du trou de montage (203), et la cavité avant (103) est formée par un espace entre le corps de haut-parleur (101) et l'ensemble d'écran (3) ; et
au moins un bloc de limitation (211) est disposé sur une extrémité de la seconde partie de mise en prise (208) proche du trou de montage (203), et le bloc de limitation (211) est configuré pour limiter la seconde zone d'étanchéité (403).

9. L'appareil de production de son selon la revendication 8, comprenant en outre un premier élément d'étanchéité (5) et un second élément d'étanchéité (6), dans lequel
le premier élément d'étanchéité (5) est disposé entre le plan de montage (202) et l'ensemble d'écran (3) ; et
le second élément d'étanchéité (6) est réparti au moins entre la surface de support (106) et la première zone d'étanchéité (401) et entre la bosse (210) et le cadre (107).

10. Un dispositif électronique, comprenant l'appareil de production de son selon l'une quelconque des revendications 1 à 9.
